# EUROPEAN PATENT APPLICATION

(11) **EP 1 460 005 A1**
(43) Date of publication of application: **22.09.2004**
(21) Application number: 04468006.4
(22) Date of filing: 11.03.2004
(51) Int. Cl.: B65G 27/00, A63H 18/00

(54) **Rotational vibrational drive**

(30) Priority: 19.03.2003 SI 200300068
(71) Applicant: Dusan, Petek, 1231 Crnuce (SI)
(72) Inventor: Dusan, Petek, 1231 Crnuce (SI)

(57) **Abstract**

ROTATIONAL-VIBRATIONAL DRIVE enables independent controlled movement of several objects in different directions at the same time on the plate with only one central motor. This motor produces rotational vibrations of the plate, so that each point of the plate describes a circular or elliptical path at each turn of the motor. Objects on the plate are equipped with flexible bristles, slanted in one direction, that enable those objects to push off against the rough surface, thus causing the objects to move forward along indented paths on the plate in any direction.
Toy, using this type of drive, has already been made, as well as the concept for Christmas crib and driving school.

## Description

SUBJECT OF THIS INVENTION IS A ROTATIONAL-VIBRATIONAL DRIVE WITH BASE PLATE, WHICH IS VIBRATING WITH A CIRCULAR MOTION, SO THAT EACH POINT OF THE PLATE DESCRIBES A CIRCULAR OR ELLIPTICAL PATH OBJECTS ON THE PLATE ARE EQUIPPED WITH FLEXIBLE BRISTLES, WHICH ARE ORIENTED IN ONE DIRECTION. WHEN THE PLATE IS VIBRATING THE BRISTLES ARE PUSHING OFF AGAINST THE PLATE SURFACE, THUS CAUSING THE OBJECTS TO MOVE FORWARD IN A CONTROLLED MANNER IN ANY DIRECTION.

The basic invention itself (item 1) is from the field of mechanics, while practical derivations and application of this type of drive (items 2, 3 and 4) are classified into entertaining program.

PLATE is any kind of platform made of material, which should be as light as possible. In most cases a vacuum drawn plastic material is used. Rotational vibration of the plate is activated. Objects are travelling along indented paths, tracks or central depression (T- or V-shaped). Instead of several legs a foamed rubber, spiral or leaf springs are used underneath the plate, so that the plate has no direct contact with the supportmg surface and there are no energy losses resulting from that. Plate may have a structured surface and has to be positioned in a horizontal plane.

OBJECTS, which are travelling on the plate surface, because of rotational vibrations of the plate, are equipped with flexible bristles on their bottom surface. These bristles are pointing downwards and are slightly slanted into the direction of movement. These bristles are pushing the objects on the rough surface in their direction, so that the objects are moved for one step for each rotational cycle, which results in the apparently steady, continuous movement of the objects. There can be several objects on the plate at the same time, and each of them can travel in its own direction, i.e. from the plate centre, towards the centre, perpendicular to the centre, or up and down the slopes on the plate. And precisely this is the essential feature of this invention.

AS A DRIVE of the plate a motor can be used or any other shaft with eccentric swing-wheel or any eccentric mass attached to it. When this eccentric mass is rotating it causes the plate to vibrate with a circular motion (rotational vibration of the plate). It is regarded that rotational vibration of the plate occurs, when the plate is vibrating in such manner, that each point of the plate describes a circular or elliptical path at each turn of the swing-wheel or eccentric mass. It is this rotational vibration which enables that objects with their pushing action of the bristles are travelling on the plate in any direction. Velocity at which the objects are moving on the plate, depends on weight of the objects, frequency and amplitude of vibrations, roughness of the plate surface, strength, flexibility and density of the bristles on bottom surfaces of the objects that are moving on the plate, etc.

As a motor in most cases an electric motor is used, which can be mounted in its housing directly in the centre of the plate with the shaft perpendicular to the plate. Or a bearing can be mounted in the centre of the plate to support one end of the shaft, with an eccentric swing-wheel or any eccentric mass attached to it. Motor that drives the shaft is connected to the bottom of the shaft via universal joint or spiral spring. The motor is attached under the plate with at least three laterally flexible supports. In the first case the motor is vibrating together with the plate, while in second case the motor is not vibrating. Rotational vibrations of the plate can be induced also by an eccentric mass attached to a shaft.

Mains voltage is used as an energy source, if electric motor is used to drive the plate. When the plate is used as a toy, teaching aid or a Christmas crib, the power supply is transformed to a lover voltage with a direct current or a battery cells can be used. Most ideally a solar cells integrated in the plate can be used.

ROTATIONAL-VIBRATIONAL DRIVE is practically tested, and a toy, i.e. plate with relief surface on which several toys are travelling along indented paths, is already operating with this type of drive. Also teaching aids, Christmas crib with moving characters, industrial and other applications can be made in a similar manner.

## Claims

1. What is claimed is A ROTATIONAL-VIBRATIONAL DRIVE,
**CHARACTERIZED IN THAT**
a single motor is used to produce rotational vibrations of the base plate, so that each point of the plate describes a circular or elliptical path at each turn of the motor, while objects on the plate, which are equipped with slightly slanted flexible bristles that enable those objects to push off against the plate surface, are independently moving forward on the plate in a controlled manner in any direction.

2. What is claimed is A TOY,
**CHARACTERIZED IN THAT**
the TOY is using ROTATIONAL-VIBRATIONAL DRIVE to move several toy-figures at the same time along the indented paths of the plate with relief surface, which can represent miniaturized playground, such us roads for cars, racetracks, paths for animals, town with people, house with dolls, or any combinations thereof, or any other game which uses this type of drive to move toys on the plate with relief surface, so that flexible bristles of the toys are pushing off against the plate surface.

3. What is claimed according to claim 1 is A CHRISTMAS CRIB,
**CHARACTERIZED IN THAT**
the ROTATIONAL-VIBRATIONAL DRIVE is used. In this CHRISTMAS CRIB a biblical figures are moving on the plate with relief surface, so that the flexible bristles are pushing the figures forward due to the rotational vibration of the plate, and thus creating an impression of Christmas crib with live characters.

4. What is claimed according to claim 1 is A TEACHING AID,
**CHARACTERIZED IN THAT**
the ROTATIONAL-VIBRATIONAL DRIVE is used. TEACHING AID has a base plate with relief surface shaped as road network, complete with all crossroads and necessary traffic signs. Miniaturized vehicles are driving along those roads with the help of rotational-vibrational drive. Person who is learning to drive is guiding its miniaturized car according to traffic regulations, and is collecting negative points for traffic violations in the same way as in the case of driving-test.
